(19) Europäisches Patentamt

European Patent Office

Office européen des brevets

(11) **EP 2 101 283 A2**

(12) **EUROPEAN PATENT APPLICATION**

(43) Date of publication:
**16.09.2009 Bulletin 2009/38**

(51) Int Cl.:
***G06K 9/00*** *(2006.01)*

(21) Application number: **09155087.1**

(22) Date of filing: **13.03.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **14.03.2008 JP 2008065229**

(71) Applicant: **Sony Corporation**
**Tokyo 108-0075 (JP)**

(72) Inventors:
• **Ohashi, Takeshi**
**TOKYO (JP)**
• **Sabe, Kohtaro**
**TOKYO (JP)**
• **Hidai, Kenichi**
**TOKYO (JP)**

(74) Representative: **Thévenet, Jean-Bruno et al**
**Cabinet Beau de Loménie**
**158, rue de l'Université**
**75340 Paris Cédex 07 (FR)**

(54) **Information processing apparatus, method, and program**

(57) An information processing apparatus includes: face detecting means (42) for detecting the orientation of a face in a face image; weight distribution generating means (44) for generating a weight distribution based on a statistical distribution of the position of a predetermined feature of the face in the face image according to the orientation of the face; first calculation means (52) for calculating a first evaluation value for evaluating each of predetermined regions of the face image to determine whether the region is the predetermined feature of the face; and face feature identifying means (47) for identifying the predetermined region as the predetermined feature of the face based on the first evaluation value and the weight distribution.

FIG. 1

**Description**

CROSS REFERENCES TO RELATED APPLICATIONS

The present invention contains subject matter related to Japanese Patent Application JP 2008-065229 filed in the Japanese Patent Office on March 14, 2008.

BACKGROUND OF THE INVENTION

1. Field of the Invention

The present invention relates to an information processing apparatus, an information processing method, and an information processing program. More particularly, the invention relates to an information processing apparatus, an information processing method, and an information processing program which allow a feature of a face to be accurately detected from a face image regardless of the orientation of the face.

2. Description of the Related Art

Various methods of detecting features of a face as characteristic points have been proposed in the related art.
For example, the proposals include a method in which four or more reference characteristic points of a face, e.g., the pupils, nostrils, and mouth edges are detected. Results of the detection are applied to a three-dimensional shape representing the face to determine a range in which a mouth midpoint is to be detected (see JP-A-2007-241579).
Another method has been proposed as follows. Characteristic points of a face are tentatively determined using a characteristic point detector having a great tolerance. A characteristic point searching range is determined from positional relationships between the characteristic points to determine final characteristic points using another characteristic point detector having a smaller tolerance (see JP-A-2008-3749).

SUMMARY OF THE INVENTION

According to the method disclosed in JP-A-2007-241579, when the detection of reference characteristic points fails, a mouth midpoint detecting range may not be properly determined, and a mouth midpoint may not be accurately detected. According to the method disclosed in JP-A-2008-3749, when the first determination of characteristic points fails, a characteristic point searching range may not be properly determined, and characteristic points may not be accurately detected.
Under the circumstances, it is desirable to make it possible to detect features of a face accurately from a face image regardless of the orientation of the face.
An information processing apparatus according to an embodiment of the invention includes face detecting means for detecting the orientation of a face in a face image, weight distribution generating means for generating a weight distribution based on a statistical distribution of the position of a predetermined feature of the face in the face image according to the orientation of the face,
**[0009]**    first calculation means for calculating a first evaluation value for evaluating each of predetermined regions of the face image to determine whether the region is the predetermined feature of the face, and face feature identifying means for identifying the predetermined region as the predetermined feature of the face based on the first evaluation value and the weight distribution.
According to another embodiment of the invention, the information processing apparatus may further include second calculation means for calculating a second calculation value by weighting the first evaluation value based on the weight distribution. The face feature identifying means may identify the predetermined region as the predetermined feature of the face based on the second evaluation value.
According to another embodiment of the invention, the information processing apparatus may further include storage means for storing the weight distribution, which has been generated in advance, in association with the orientation of the face. The weight distribution generating means may select the weight distribution stored in the storage means according to the orientation of the face.
According to another embodiment of the invention, the information processing apparatus may further include range setting means for setting a range of positions where weight values are equal to or greater than a predetermined value based on the weight distribution. The first calculation means may calculate the first evaluation value for each of predetermined regions of the face image within the range. The face feature identifying means may identify the predetermined region as the predetermined feature of the face based on the first evaluation value within the range.
According to another embodiment of the invention, the information processing apparatus may further include storage means for storing range information representing the range, which has been set in advance, in association with the orientation of the face. The range setting means may select the range information stored in the storage means according to the orientation of the face.

According to another embodiment of the invention, the predetermined regions may be regions expressed in pixels.

According to another embodiment of the invention, the weight distribution may be a function of an angle of the face which determines the orientation of the face.

According to another embodiment of the invention, there is provided an information processing method including the steps of detecting the orientation of a face in a face image, generating a weight distribution based on a statistical distribution of the position of a predetermined feature of the face in the face image according to the orientation of the face, calculating a first evaluation value for evaluating each of predetermined regions of the face image to determine whether the region is the predetermined feature of the face, and identifying the predetermined region as the predetermined feature of the face based on the first evaluation value and the weight distribution.

According to another embodiment of the invention, there is provided a program for causing a computer to execute a process including the steps of detecting the orientation of a face in a face image, generating a weight distribution based on a statistical distribution of the position of a predetermined feature of the face in the face image according to the orientation of the face, calculating a first evaluation value for evaluating each of predetermined regions of the face image to determine whether the region is the predetermined feature of the face, and identifying the predetermined region as the predetermined feature of the face based on the first evaluation value and the weight distribution.

According to the embodiments of the invention, the orientation of a face in a face image is detected. A weight distribution is generated based on a statistical distribution of the position of a predetermined feature of the face in the face image. A first evaluation value is calculated for each of predetermined regions of the face image for evaluating whether the region is the predetermined feature of the face. The predetermined region is identified as the predetermined feature of the face based on the first evaluation value and the weight distribution.

According to the embodiments of the invention, a feature of a face can be more accurately detected from an image of the face regardless of the orientation of the face.

BRIEF DESCRIPTION OF THE DRAWINGS

Fig. 1 is a block diagram showing an exemplary configuration of an embodiment of a face part detecting apparatus according to an embodiment of the invention;
Fig. 2 is illustrations for explaining angles which determine orientation of a face;
Fig. 3 is a flow chart for explaining a face part detecting process performed by the face part detecting apparatus shown in Fig. 1;
Fig. 4 is illustrations for explaining processes performed by a face detecting section and a face image rotation correcting section;
Fig. 5 is an illustration for explaining a face part weight map;
Fig. 6 is illustrations for explaining a face part weight map;
Fig. 7 is an illustration for explaining an example of a face part weight map;
Fig. 8 is illustrations for explaining face part weight maps according to pitch angles and yaw angles;
Fig. 9 is an illustration for explaining another example of a face part weight map;
Fig. 10 is a block diagram showing another exemplary configuration of a face part detecting apparatus;
Fig. 11 is a flow chart showing a face part detecting process performed by the face part detecting apparatus shown in Fig. 10;
Fig. 12 is a block diagram showing still another exemplary configuration of a face part detecting apparatus;
Fig. 13 is a flow chart showing a face part detecting process performed by the face part detecting apparatus shown in Fig. 12;
Fig. 14 is an illustration for explaining a face part detecting range;
Fig. 15 is an illustration for explaining a face part detecting range;
Fig. 16 is a block diagram showing still another exemplary configuration of a face part detecting apparatus;
Fig. 17 is a flow chart showing a face part detecting process performed by the face part detecting apparatus shown in Fig. 16;
Fig. 18 is a block diagram showing still another exemplary configuration of a face part detecting apparatus;
Fig. 19 is a flow chart showing a face part detecting process performed by the face part detecting apparatus shown in Fig. 18; and
Fig. 20 is a block diagram showing an example of a hardware configuration of a computer serving as a face part detecting apparatus according to an embodiment of the invention.

DETAILED DESCRIPTION OF THE INVENTION

Embodiments of the invention will now be described with reference to the drawings.

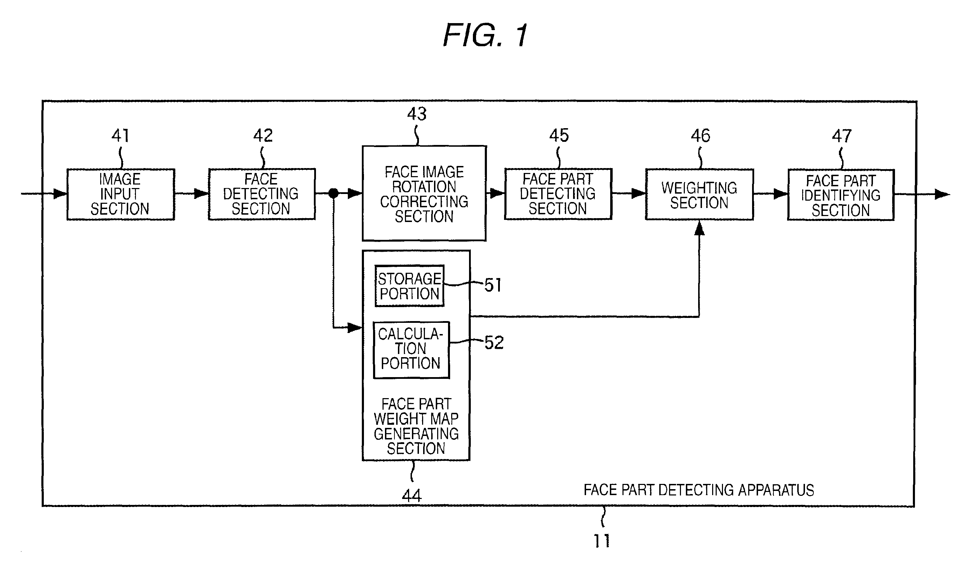

Fig. 1 is a diagram showing an exemplary configuration of an embodiment of a face part detecting apparatus 11 according to the invention.

The face part detecting apparatus 11 shown in Fig. 1 detects a face included in an input image and detects a face part which is a predetermined feature of the face from an image of the face. While the face part detecting apparatus 11 primarily detects human faces, the apparatus can similarly detect faces of animals other than human beings and faces of dolls made in the shape of human beings. Although a term "face part" (or "facial part") means a feature of a face itself such as an eye, nose or mouth, the term may mean a center point, an edge point, or contour of a feature of a face.

The face part detecting apparatus 11 shown in Fig. 1 includes an image input section 41, a face detecting section 42, a face image rotation correcting section 43, a face part weight map generating section 44, a face part detecting section 45, a weighting section 46, and a face part identifying section 47. The face part weight map generating section 44 includes a storage portion 51 and a calculation portion 52.

The image input section 41 acquires an image imaged by a video camera or the like or an image recorded in advance in a recording medium such as a removable medium (not shown) as an input image and supplies the image to the face detecting section 42.

The face detecting section 42 detects a face and the orientation of the face from the input image supplied from the image input section 41. The section 42 extracts a face image based on the position and the size of a face detecting area that is an area in which a face is to be detected and supplies the face image to the face image rotation correcting section 43 and the face part weight map generating section 44 along with information representing the orientation of the face.

Specifically, the face detecting section 42 detects a face and the orientation of the face based on face images of faces oriented in various directions which are learned in advance as proposed in JP-A-2005-284487, JP-A-2007-249852, and Kotaro Sabe and Kenichi Hidai, "Learning of a Real-time Arbitrary Posture Face Detector Using Pixel Difference Features", Lectures at the 10th Symposium on Sensing via Image Information, pp. 547-552, 2004.

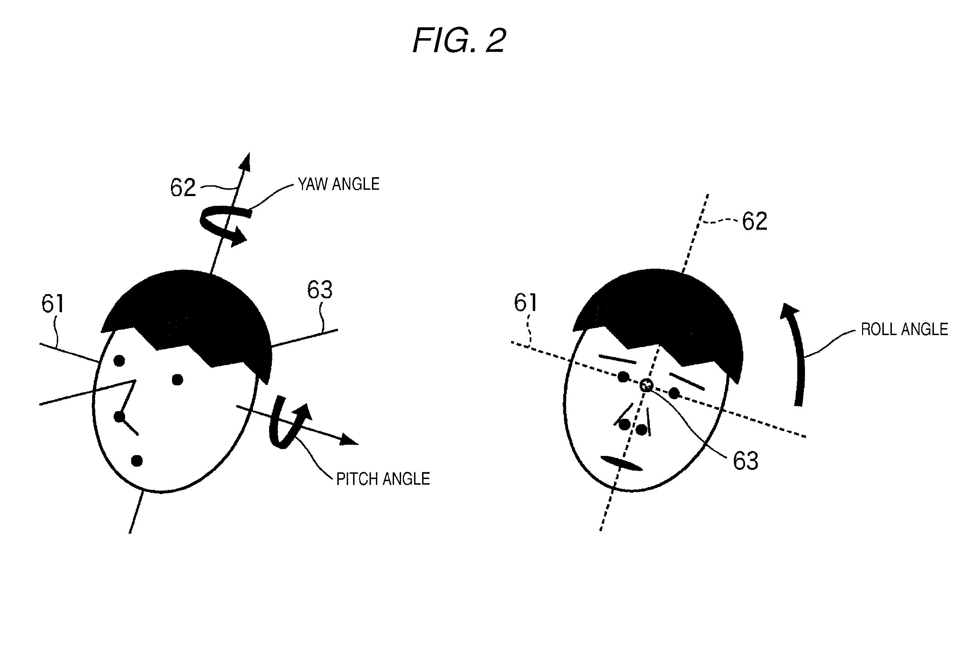

As shown in Fig. 2, the orientation of a face is represented by a pitch angle, a yaw angle, and a roll angle. As shown on the left side of Fig. 2, a pitch angle is an upward or downward angle about an axis 61 which is parallel to a line connecting the centers of the eyes of a person and which extends substantially through the center of the head of the person. For example, the pitch angle has a positive value when the person faces upward and a negative value when the person faces downward. As shown on the left side of Fig. 2, a yaw angle is an angle about an axis 62 which is perpendicular to the axis 61 and which perpendicularly extends substantially through the center of the head of the person. For example, the yaw angle may be defined as an angle which has a value of 0 deg, a negative value, and a positive value when the person faces forward, rightward, and leftward, respectively. As shown on the right side of Fig. 2, the roll angle is an angle of rotation about an axis 63 which is perpendicular to the axes 61 and 62, and the angle is 0 deg when the axis 61 is horizontal.

The face detecting section 42 learns a face image of a face of a person having a predetermined yaw angle and a predetermined pitch angle extracted from a face detecting area having a predetermined size. The section compares an area of the input image supplied from the image input section 41 with the learned face image, the area of the input image having the same size as the face image detecting area. Thus, the input image is evaluated to determine whether it represents a face or not. Thus, a face and the orientation of the face is detected.

The orientation of the face in the face image learned by the face detecting section 42 is classified into each range of angles. The face detecting section 42 detects the orientation of a face as a yaw angle within a rough range, e.g., a range from -45 deg to -15 deg, a range from -15 deg to +15 deg, or a range from +15 deg to +45 deg, the frontward posture of the face serving as a reference for the ranges of angles. The result of such detection is averaged with a plurality of detection results which have been similarly obtained in areas around the face detecting area, whereby a more accurate angle can be obtained. The invention is not limited to the above-described method, and the face detecting section 42 may detect a face and the orientation of the face using other methods.

The face image rotation correcting section 43 rotates the face image supplied from the face detecting section 42 (or corrects the rotation of the face image) by a roll angle which is one of pieces of information representing the orientation of the face, and the section supplies the resultant face image to the face part detecting section 45.

According to a pitch angle and a yaw angle which are pieces of information representing the orientation of the face supplied from the face detecting section 42, the face part weight map generating section 44 generates a face part weight map for imparting higher weights to pixels in a position where a predetermined face part of the face image is likely to exist, and the section 44 supplies the map to the weighting section 46. Details of the face part weight map will be described later.

In the storage portion 51 of the face part weight map generating section 44, a face part weight map is stored in association with each size of the face image supplied from the face detecting section 42 and in association with each type of face part of the face image, the face part types being defined based on a forward posture of the face (in which the roll angle, pitch angle, and yaw angle of the face are all 0 deg). That is, a face part weight map for the right eye is different from a face part weight map for the left eye even when the face part weight maps are associated with face images having the same size. The face part weight maps stored in the storage portion 51 will be hereinafter referred to as "basic face part weight maps".

The calculation portion 52 of the face part weight map generating section 44 obtains a face part weight map by performing calculations according to a pitch angle and a yaw angle supplied from the face detecting section 42 based on the basic face part weight maps in the storage portion 51.

The face part detecting section 45 calculates a detection score for each pixel of a face image supplied from the face image rotation correcting section 43 and supplies the score to the weighting section 46, the detecting score serving as an evaluation value for evaluating whether the pixel represents a face part or not.

Specifically, the face part detecting section 45 learns a face part extracted in an area having a predetermined size, for example, in the same manner as done in the face detecting section 42. The section 45 compares an area of the input face image with an image of the learned face part, the area having the same size as the predetermined size of the learned face part. Thus, the section 45 calculates detection scores of the pixels in the area having the predetermined size. When the pixels in the area of the predetermined size have high detection scores, the image in the area is regarded as a candidate for the face part to be detected.

The weighting section 46 weights the detection score of each pixel supplied from the face part detecting section 45 based on the face part weight map supplied from the face part weight map generating section 44 and supplies the weighted detection score of each pixel to the face part identifying section 47.

From the detection scores of all pixels of the face image supplied from the weighting section 46, the face part identifying section 47 identifies pixels having detection scores equal to or greater than a predetermined threshold as pixels forming the face part of interest.

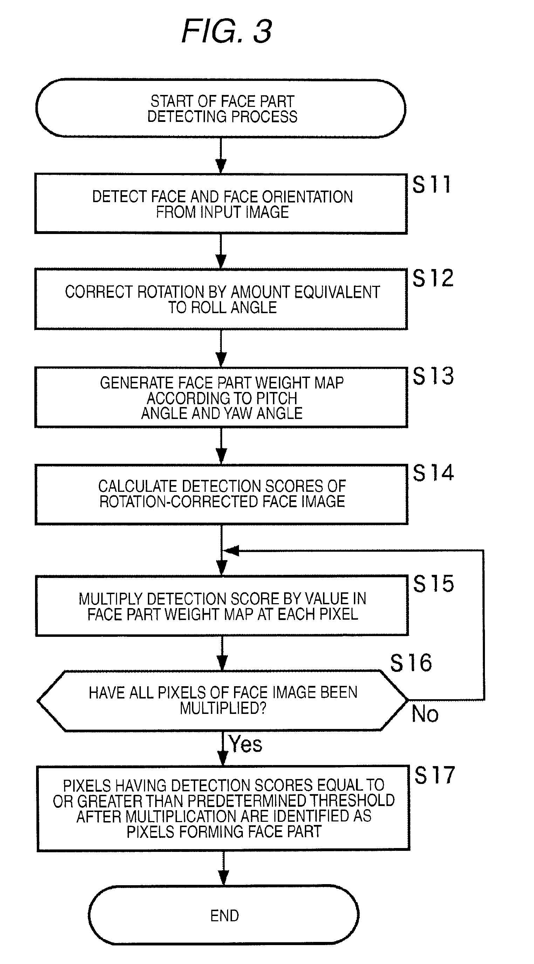

The face part detecting process performed by the face part detecting apparatus 11 will now be described with reference to the flow chart shown in Fig. 3.

The face part detecting process is started when the image input section 41 of the face part detecting apparatus 11 acquires an input image and supplies the image to the face detecting section 42 and the face image rotation correcting section 43.

At step S11, the face detecting section 42 detects a face and the roll angle, pitch angle, and yaw angle determining the orientation of the face from the input image supplied from the image input section 41. The face detecting section 42 extracts a face image based on the position and the size of the face detecting area and supplies the face image to the face image rotation correcting section 43 along with the roll angle. The face detecting section 42 also supplies the size of the extracted face image to the face part weight map generating section 44 along with the pitch angle and the yaw angle.

At step S12, the face image rotation correcting section 43 rotates the face image (or corrects the rotation of the face image) in an amount equivalent to the roll angle supplied from the face detecting section 42 and supplies the resultant face image to the face part detecting section 45.

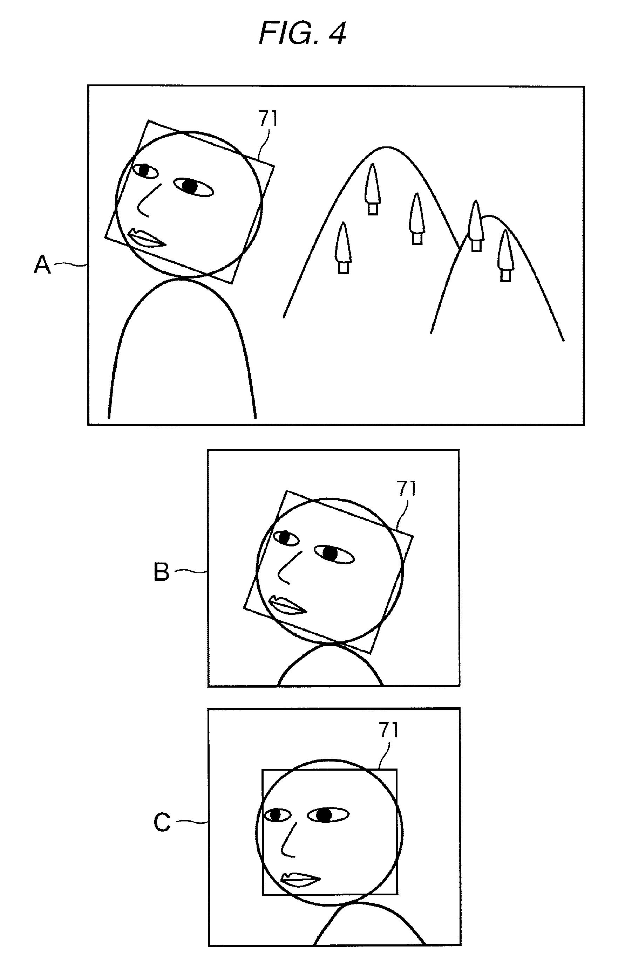

For example, the face detecting section 42 detects a face and the roll angle (= 30 deg), pitch angle (= 0 deg), and yaw angle (= -20 deg) thereof from the input image which is shown as an image A in Fig. 4 to extract a face image 71.

The face image rotation correcting section 43 corrects the rotation of the face image 71 represented by an image B in Fig. 4 by 30 deg such that an imaginary line connecting the centers of the eyes of the face becomes horizontal (that is, a roll angle becomes 0 deg) as represented by an image C in Fig. 4.

Thus, a face image 71 with eyes in a horizontal positional relationship (with a roll angle of 0 deg) is obtained from the input image.

At step S13, the face part weight map generating section 44 generates a face part weight map according to the size, pitch angle, and yaw angle of the face image 71 supplied from the face detecting section 42 and supplies the map to the weighting section 46.

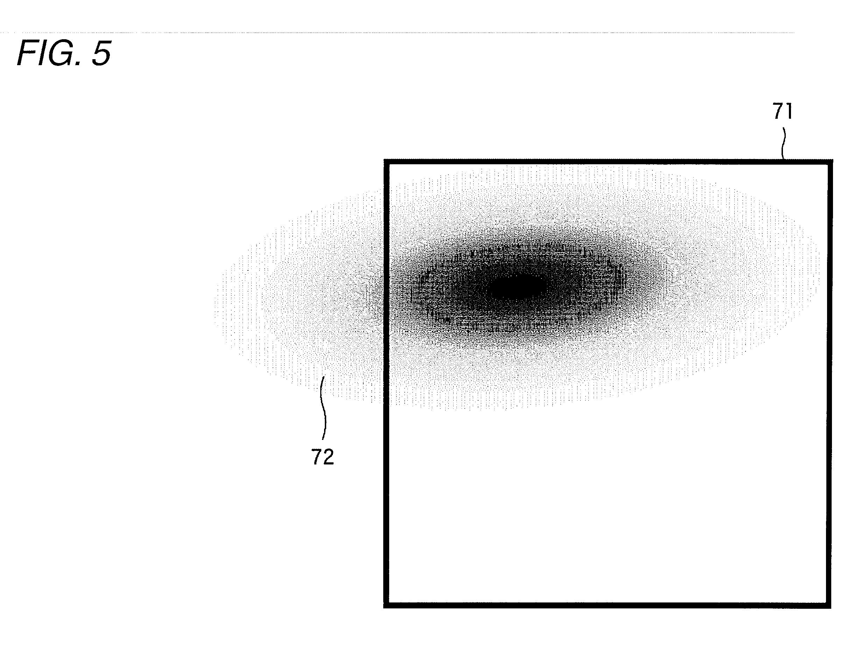

The face part weight map generated by the face part weight map generating section 44 will now be described with reference to Figs. 5 to 8. The description will be made on an assumption that the face part to be detected is the right eye.

In general, when a plurality of face images having the same size obtained as a result of face detection are overlapped with each other, the position of the right eye varies from one face to another because of differences between the positions, shapes and orientations of the faces on which face detection has been performed and because of personal differences in the position of the right eye.

To put it another way, when the positions of right eyes (the positions of the centers of right eyes) are plotted on overlapping face images having the same size, an area may be considered as including the right eyes (the centers of the right eyes) of the face images having the same size with high likelihood, the higher the density of the plot in that area. A face part weight map is made based on such a distribution plot.

For example, the face part weight map 72 shown in Fig. 5 is obtained based on a distribution of right eye positions (center positions) plotted by overlapping several hundred face images having the same size as the face image 71. That is, the face part weight map 72 is obtained based on a statistical distribution of the position of the right eyes of face images.

In the face part weight map 72 shown in Fig. 5, an area is plotted in a higher density, the darker the area appears. Therefore, a right eye exists in that area with a high likelihood. Thus, high weights are imparted to the pixels of a face image associated with the dark area.

A weight imparted using a face part weight map 72 is represented by a value in a predetermined range. For example, weights in the face part weight map 72 shown in Fig. 5 have values in the range from 0.0 to 1.0 where a weight in a position having the maximum density of the plot has a value of 1.0 and where a weight in a position having a plot density of 0 has a value of 0.0.

Since the position of a right eye represented by a plotted position varies depending on the orientation of the face, a face part weight map 72 must be generated according to the orientation of the face.

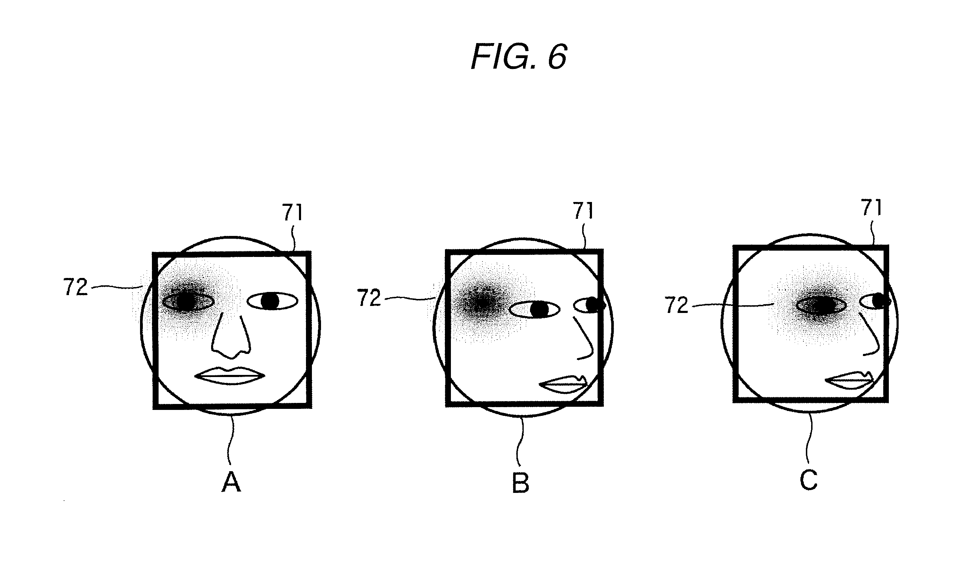

For example, as represented by an image A in Fig. 6, when a face part weight map 72 generated based on only a face image of a forward-looking face is applied to a face image 71 of a forward-looking face, the weights imparted are centered at the right eye of the face.

However, when the face part weight map 72 for the image A in Fig. 6 is applied to a face image 71 of a leftward-looking (pitch angle = 0 deg, yaw angle = +20 deg) face, weights are imparted to positions different from the right eye which must be weighted as represented by an image B in Fig. 6. Thus, the accuracy of face part detection is reduced.

Under the circumstance, the face part weight map generating section 44 generates a face part weight map 72 as represented by an image C in Fig. 6 based on a pitch angle of 0 deg and a yaw angle of +20 deg.

More specifically, the calculation portion 52 defines the face part weight map 72 as a function of a pitch angle and a yaw angle as variables based on a basic face part weight map according to the size of the face image 71 stored in the storage portion 51(the basic map is equivalent to the face part weight map 72 for the image A in Fig. 6). The calculation portion substitutes the pitch angle of 0 deg and the yaw angle of +20 deg in the face part weight map 72 to obtain another face part weight map 72 which is represented by an image C in Fig. 6.

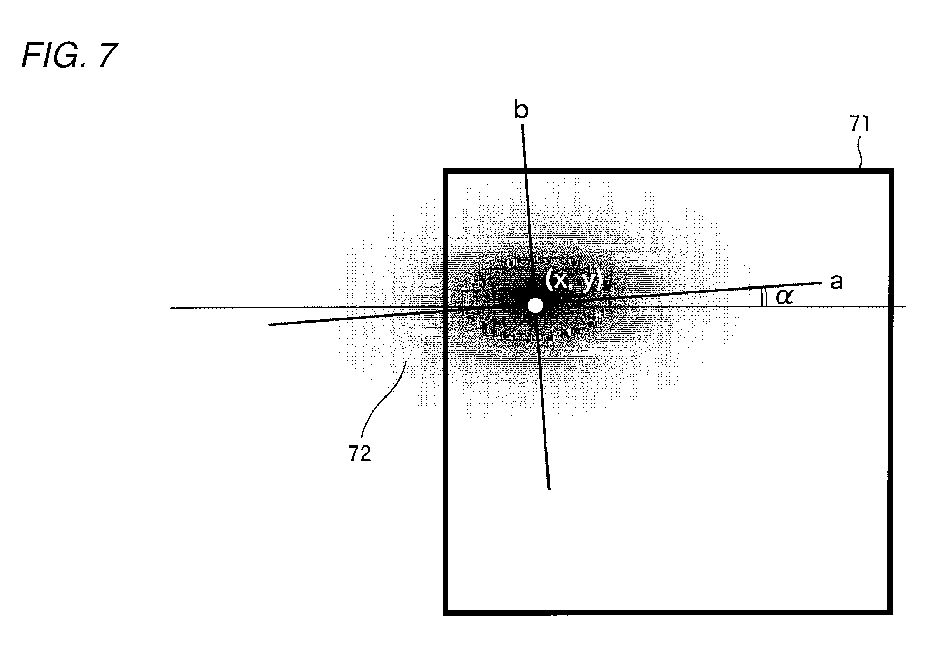

For example, the calculation portion 52 approximates the face part weight map 72 (basic face part weight map) by a composite distribution obtained by synthesizing normal distributions about respective axes $\underline{a}$ and b which are orthogonal to each other, as shown in Fig. 7. The map is determined by parameters such as center coordinates (x, y) representing an intersection of the axes $\underline{a}$ and b, an angle $\alpha$ that the axis $\underline{a}$ defines with respect to the horizontal direction of the face image 71, and respective variances $\sigma_a$ and $\sigma_b$ of normal distributions about the axes a and b. Further, the calculation portion 52 calculates each of the parameters as a function of a pitch angle and a yaw angle to obtain a face part weight map 72 having continuous weight values in accordance with continuous pitch angle values and yaw angle values.

Thus, even in the case of a face image 71 of a leftward-looking face as represented by the image B, weights are imparted with a distribution centered at the right eye as represented by the image C in Fig. 6.

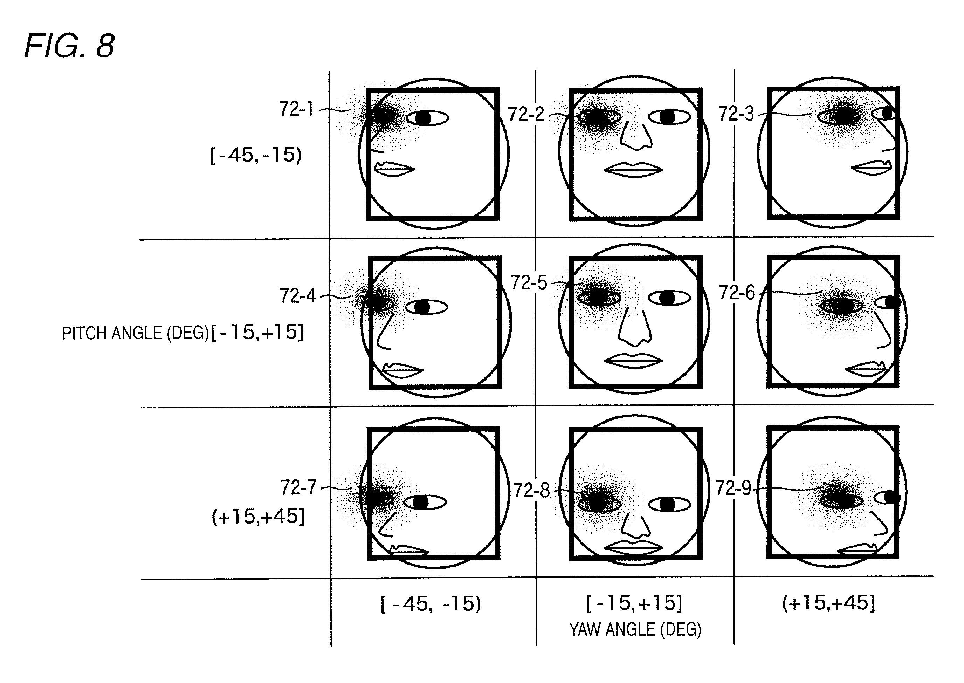

As thus described, the face part weight map generating section 44 generates face part weight maps 72 in accordance with predetermined pitch angles and yaw angles as shown in Fig. 8.

Fig. 8 shows face part weight maps 72 each of which is in accordance with pitch angles and yaw angles included in predetermined ranges of angles. In Fig. 8, the symbols "[" and "]" represent inclusive lower and upper limits of an angle range, respectively, and the symbols "(" and ")" represent non-inclusive lower and upper limits of an angle range, respectively.

For example, a face part weight map 72-1 shown in the top left part of Fig. 8 is generated from a pitch angle which is -45 deg or more and less than -15 deg and a yaw angle which is -45 deg or more and less than -15 deg.

A face part weight map 72-2 shown in the top middle part of Fig. 8 is generated from a pitch angle which is equal to or more than -45 deg and less than -15 deg and a yaw angle which is equal to or more than -15 deg and less than +15 deg.

A face part weight map 72-3 shown in the top right part of Fig. 8 is generated from a pitch angle which is equal to or more than -45 deg and less than -15 deg and a yaw angle which is more than +15 deg and equal to or less than +45 deg.

A face part weight map 72-4 shown in the middle left part of Fig. 8 is generated from a pitch angle which is equal to or more than -15 deg and less than +15 deg and a yaw angle which is equal to or more than -45 deg and less than -15 deg.

A face part weight map 72-5 shown in the middle of Fig. 8 is generated from a pitch angle which is equal to or more than -15 deg and less than +15 deg and a yaw angle which is equal to or more than -15 deg and less than +15 deg. The face part weight map 72-5 is the same as the basic face part weight map stored in the storage portion 51.

A face part weight map 72-6 shown in the middle right part of Fig. 8 is generated from a pitch angle which is equal to or more than -15 deg and less than +15 deg and a yaw angle which is more than +15 deg and equal to or less than +45 deg.

A face part weight map 72-7 shown in the bottom left part of Fig. 8 is generated from a pitch angle which is more than +15 deg and equal to or less than +45 deg and a yaw angle which is equal to or more than -45 deg and less than -15 deg.

A face part weight map 72-8 shown in the bottom middle part of Fig. 8 is generated from a pitch angle which is more than +15 deg and equal to or less than +45 deg and a yaw angle which is equal to or more than -15 deg and less than +15 deg.

A face part weight map 72-9 shown in the bottom right part of Fig. 8 is generated from a pitch angle which is more than +15 deg and equal to or less than +45 deg and a yaw angle which is more than +15 deg and equal to or less than +45 deg.

As thus described, the face part weight map generating section 44 can generate a face part weight map 72 according to a pitch angle and a yaw angle.

Referring again to the flow chart in Fig. 3, at step S14, the face part detecting section 45 calculates a detection score at each pixel of the rotation-corrected face image supplied from the face image rotation correcting section 43 to detect the right eye that is a face part. The section 45 supplies the scores to the weighting section 46, and the process proceeds to step S15.

At step S15, the weighting section 46 weights the detection score of each pixel supplied from the face part detecting section 45 based on the face part weight map 72 supplied from the face part weight map generating section 44. The section 46 supplies the weighted detection score of each pixel to the face part identifying section 47, and the process proceeds to step S16.

More specifically, the weighting section 46 multiplies the detection score of each pixel by the weight value for that pixel in the face part weight map 72 according to Expression 1 shown below.

That is, the face image 71 is normalized on an assumption that the horizontal rightward direction of the image constitutes an "x direction"; the vertical downward direction of the image constitutes a "y direction; and the top left end of the image constitutes the origin $(x, y) = (0,0)$. Let us further assume that the detection score of the pixel at coordinates $(x, y)$ is represented by "ScorePD $(x,y)$" and that the weight value in the face part weight map 72 associated with the coordinates $(x, y)$ is represented by "Weight $(x,y)$". Then, after a weight is imparted, the pixel at the coordinates $(x,y)$ has a detection score Score $(x,y)$ as given by Expression 1.

$$Score\ (x,y) = ScorePD\ (x,y) \times Weight\ (x,y) \quad Exp.\ 1$$

At step S16, the weighting section 46 determines whether the multiplication has been carried out for all pixels of the face image 71.

When it is determined at step S16 that the multiplication has not been carried out for all pixels of the face image 71, the processes at steps S15 and S16 are repeated until the multiplication is carried out for all pixels of the face image 71.

When it is determined at step S16 that the multiplication has been carried out for all pixels of the face image 71, the process proceeds to step S17.

At step S17, the face part identifying section 47 checks the detection scores of all pixels of the face image 71 supplied from the weighting section 46 to identify pixels having detection scores equal to or greater than a predetermined threshold as pixels forming the face part.

Through the above-described processes, the face part detecting apparatus 11 can detect the right eye that is a face part from the face image 71 extracted from the input image using the face part weight map 72.

Since a face part weight map 72 generated according to the orientation of a face is used, detection scores of a part of the face can be accurately weighted in accordance with the orientation of the face. As a result, a feature of a face can be accurately detected from a face image regardless of the orientation of the face.

It has been described with reference to Fig. 8 that face part weight maps 72 are generated based on pitch angles and yaw angles in three ranges, i.e., the range of -45 deg or more and less than -15 deg, the range of -15 deg or more and less than +15 deg, and the range of more than +15 deg and equal to or less than +45 deg. However, the maps may be generated from other ranges of angles.

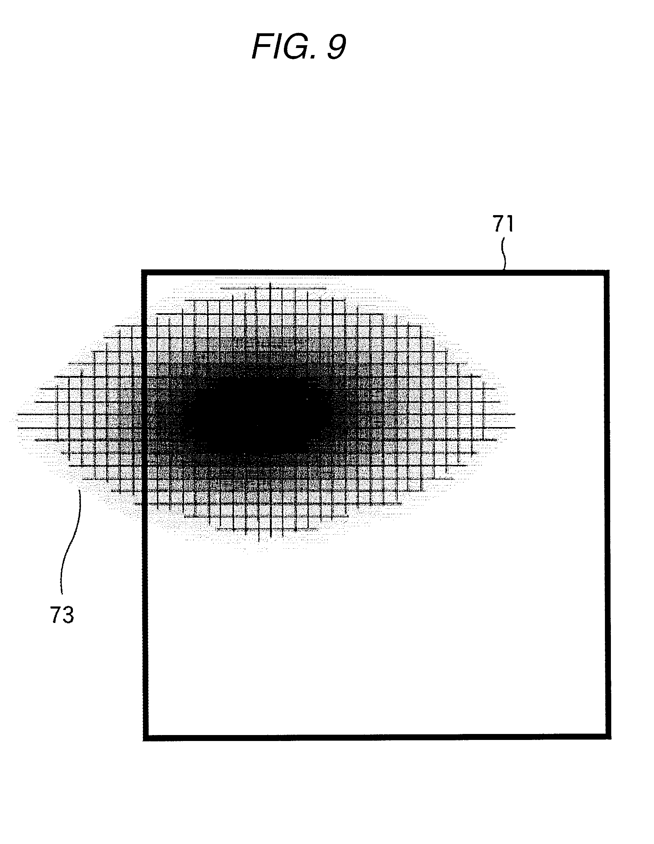

The weight values in the face part weight maps 72 are not limited to distributions of continuous values as described with reference to Fig. 7. Alternatively, the weight values may be discretely given in association with coordinate values normalized in the face image 71 as represented by a face part weight map 73 in Fig. 9.

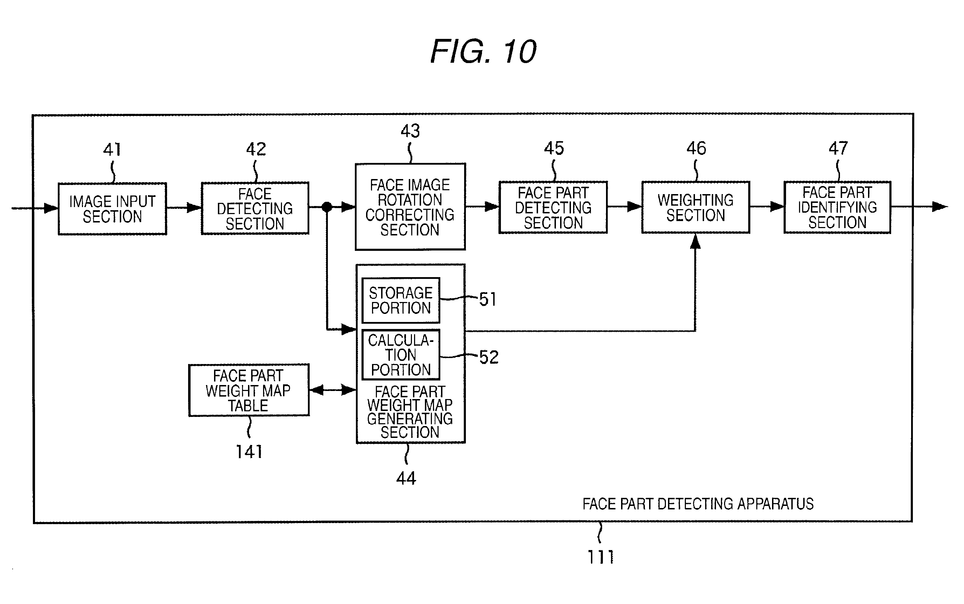

Another exemplary configuration of a face part detecting apparatus will now be described with reference to Fig. 10.

Elements corresponding to each other between Figs. 1 and 10 are indicated by like reference numerals, and the description of such elements will be omitted where appropriate. Specifically, a face part detecting apparatus 111 shown in Fig. 10 is basically similar in configuration to the face part detecting apparatus 11 shown in Fig. 1 except that it additionally has a face part weight map table 141.

In the face part weight map table 141, face part weight maps 72 generated by a face part weight map generating section 44 are stored in association with sizes, pitch angles, and yaw angles of a face image 71.

More specifically, what is stored in the face part weight map table 141 is face part weight maps 72 associated with predetermined ranges of pitch angles and yaw angles of a face image 71 in each size as illustrated in Fig. 8.

The face part weight map generating section 44 selects a face part weight map 72 from the face part weight map table 141 based on the size, pitch angle, and yaw angle of a face image 71 supplied from a face detecting section 42.

Specifically, the face part weight map generating section 44 selects a face part weight map 72 generated in the past from the face part weight map table 141 based on the size, pitch angle, and yaw angle of the face image 71.

The face part weight maps 72 stored in the face part weight map table 141 are not limited to those generated by the face part weight map generating section 44 in the past, and maps supplied from other apparatus may be stored in the table.

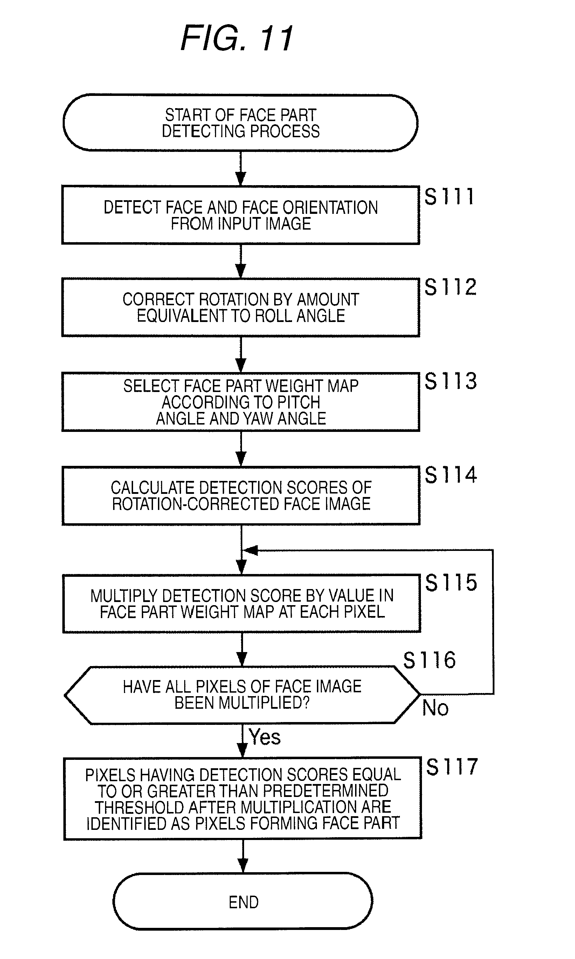

A face part detecting process performed by the face part detecting apparatus 111 shown in Fig. 10 will now be described with reference to the flow chart in Fig. 11.

Processes performed at steps S111 and S122 and steps S114 to S117 of the flow chart in Fig. 11 will not be described because they are similar to the processes at steps S11 and S12 and steps S14 to S17 of the flow chart in Fig. 3.

At step S113, the face part weight map generating section 44 selects a face part weight map 72 from the face part weight map table 141 based on the size, pitch angle, and yaw angle of a face image 71, whose roll angle has been corrected, supplied from the face detecting section 42, and the section 44 supplies the map to the weighting section 46.

Through the above-described process, the face part detecting apparatus 111 can detect a right eye that is a face part of a face image 71 extracted from an input image using a face part weight map 72 stored in the face part weight map table 141.

Since a face part weight map 72 generated and stored in advance is used as thus described, there is no need for newly generating a face part weight map 72 according to a pitch angle and a yaw angle. The detection scores of a face part can be accurately weighted according to the orientation of the face. As a result, a feature of a face can be more accurately detected from a face image regardless of the orientation of the face with a small amount of calculation.

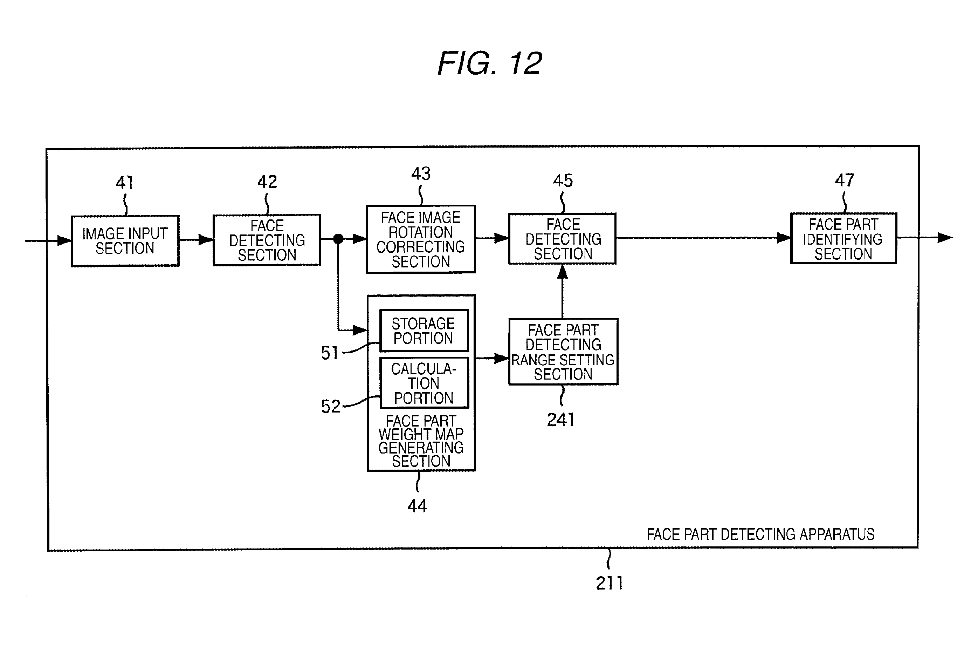

Still another exemplary configuration of a face part detecting apparatus will now be described with reference to Fig. 12.

Elements corresponding to each other between Figs. 1 and 12 will be indicated by like reference numerals, and the description of such elements will be omitted where appropriate. A face part detecting apparatus 211 shown in Fig. 12 is basically similar in configuration to the face part detecting apparatus 11 in Fig. 1 except that it does not have the weighting section 46 that the face part detecting apparatus 11 in Fig. 1 has and that it has a face part detecting range setting section 241.

Based on a face part weight map 72 generated by a face part weight map generating section 44, the face part detecting range setting section 241 sets a face part detecting range which is a range of weight values equal to or greater than a predetermined value. The section 241 supplies range information indicating the face part detecting range to a face part detecting section 45.

The face part detecting section 45 calculates a detection score of each pixel of a face image 71 supplied from a face image rotation correcting section 43 within the face part detecting range indicated by the range information from the face part detecting range setting section 241. The section 45 supplies the detection scores to a face part identifying section 47.

From the detection scores of all pixels within the face part detecting range supplied from the face part detecting section 45, the face part identifying section 47 identifies pixels having detection scores equal to or greater than a predetermined threshold as pixels forming a face part.

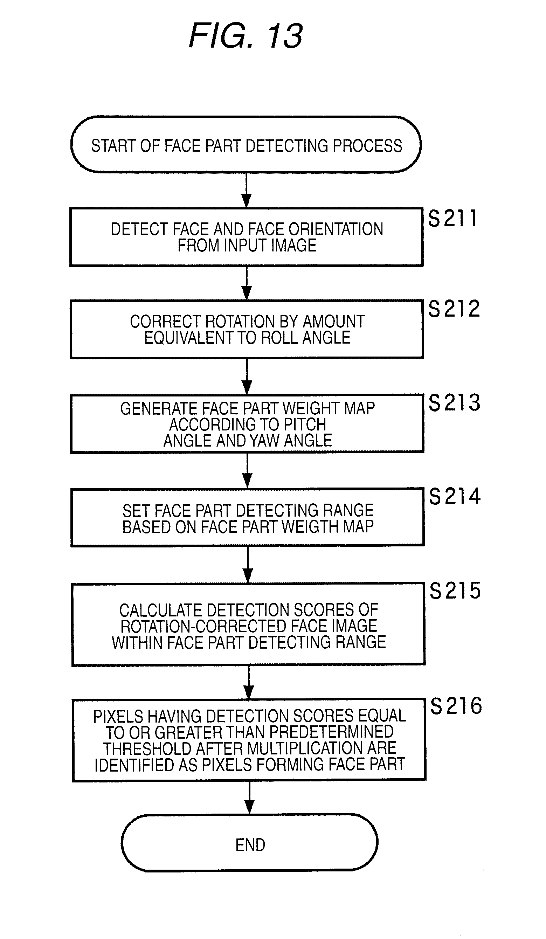

A face part detecting process performed by the face part detecting apparatus 211 shown in Fig. 12 will now be described with reference to the flow chart in Fig. 13.

Processes at steps S211 to S213 of the flow chart in Fig. 13 will not be described because they are similar to the processes at steps S11 to S13 of the flow chart in Fig. 3.

At step S214, the face part detecting range setting section 241 sets a face part detecting range, which is a range of weight values equal to or greater than a predetermined value, in a face part weight map 72 supplied from the face part weight map generating section 44.

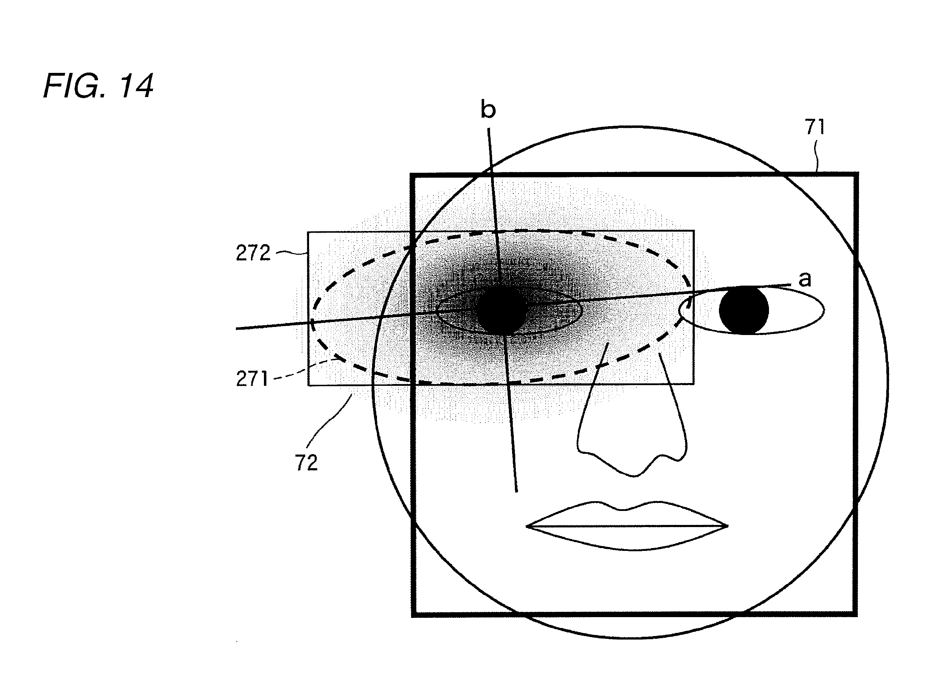

Specifically, the face part detecting range setting section 241 sets, for example, the inside of an ellipse 271 in a face part weight map 72 as described with reference to Fig. 7 as a face part detecting range as shown in Fig. 14, the ellipse representing respective ranges $3\sigma_a$ and $3\sigma_b$ of normal distributions of weight values about axes $\underline{a}$ and b, in which weight values are equal to or greater than a predetermined value.

In order to calculate detection scores with a smaller amount of calculation, the inside of a rectangle 272 circumscribing the ellipse 271 may alternatively be set as a face part detecting range.

The face part detecting range setting section 241 supplies range information indicating the face part detecting range thus set to the face part detecting section 45.

At step S215, the face part detecting section 45 calculates a detection score at each pixel within the face part detecting range indicated by the range information from the face part detecting range setting section 241 of the face image supplied from the face image rotation correcting section 43. The section 45 supplies the detection scores to the face part identifying section 47.

At step S216, from the detection scores of all pixels within the face part detecting range supplied from the face part detecting section 45, the face part identifying section 47 identifies pixels having detection scores equal to or greater than a predetermined threshold as pixels forming a face part.

Through the above-described processes, the face part detecting apparatus 211 can detect a right eye which is a face part of a face image 71 extracted from an input image within a face part detecting range set based on a face part weight map 72.

Since a face part detecting range is set based on a face part weight map 72 according to the orientation of a face of interest as thus described, there is no need for calculating detection scores of all pixels of a face image 71. As a result, a feature of a face can be more accurately detected from a face image regardless of the orientation of the face with a smaller amount of calculation.

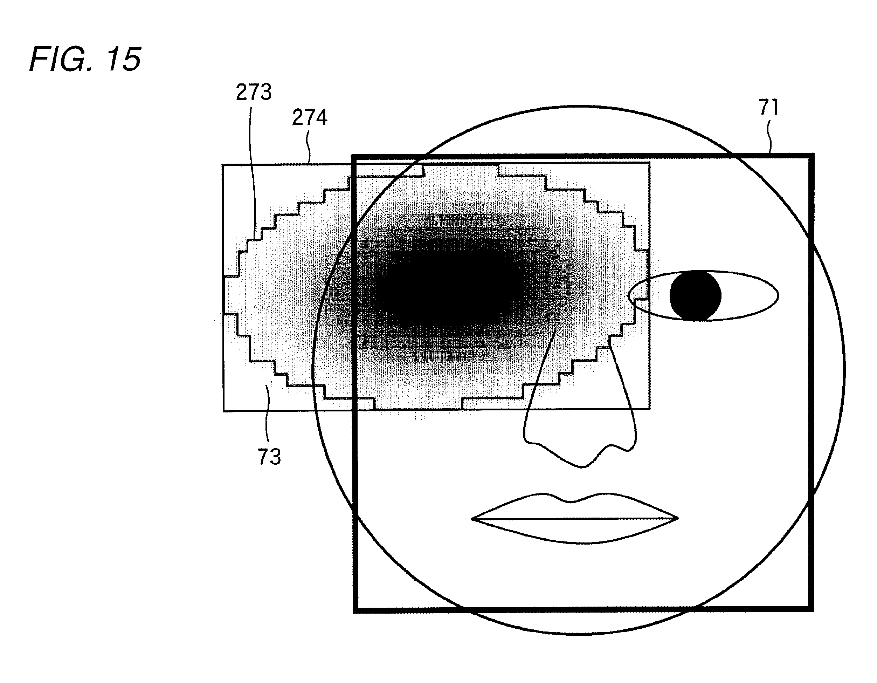

It has been described above that a face part detecting range is set based on a face part weight map 72 as described with reference to Fig. 7. Alternatively, as shown in Fig. 15, the face part detecting range may be the inside of a boundary 273 indicating a region having weights of predetermined values (a region having weights equal to or greater than a predetermined value) in a face part weight map 73 showing weight values which are discretely given in association with coordinate values normalized in a face image 71. In order to allow a further reduction in the amount of calculation, the face part detecting range may alternatively be the inside of a rectangular boundary 274 which circumscribes the boundary 273.

The face part detecting apparatus 211 may be configured to allow a face part detecting range set by the face part detecting range setting section 241 to be stored in association with a pitch angle and a yaw angle in the same manner as employed in the face part detecting apparatus 111 shown in Fig. 10 to allow a face part weight map 72 generated from the face part weight map table 141 to be stored in association with a pitch angle and a yaw angle.

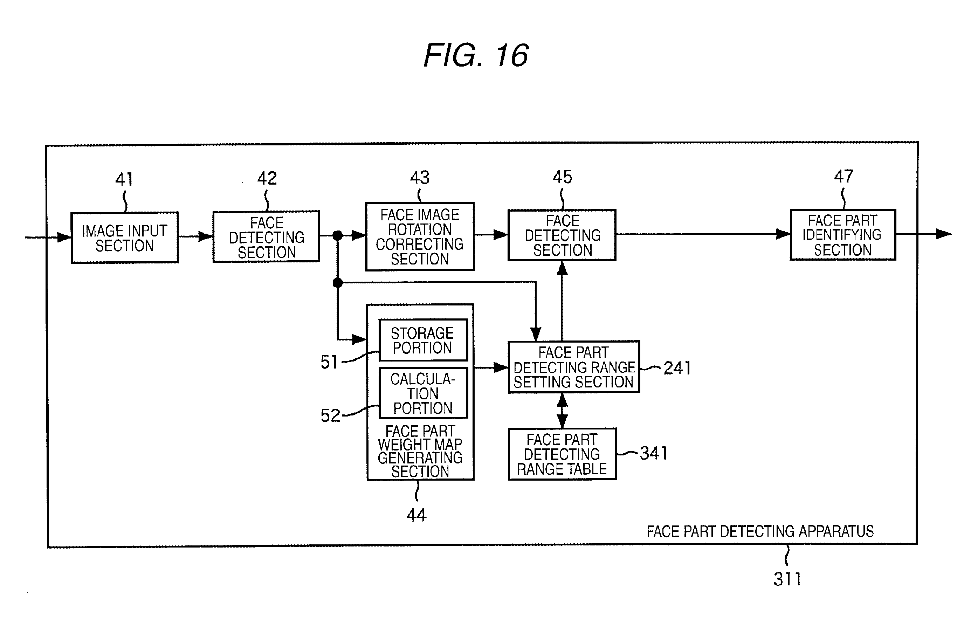

A description will now be made with reference to Fig. 16 on an exemplary configuration of a face part detecting apparatus in which a face part detecting range can be stored.

Elements corresponding to each other between Figs. 12 and 16 are indicated by like reference numerals, and the description of such elements will be omitted where appropriate. A face part detecting apparatus 311 shown in Fig. 16 is basically similar in configuration to the face part detecting apparatus 211 except that it has a face part detecting range table 341.

Referring to Fig. 16, a face detecting section 42 supplies a face image 71 and the roll angle of the same to a face image rotation correcting section 43 and supplies the information of the size, pitch angle, and yaw angle of the face image 71 to a face part weight map generating section 44 and a face part detecting range setting section 241.

In a face part detecting range table 341, range information indicating a face part detecting range set by the face part detecting range setting section 241 is stored in association with the size, pitch angle, and yaw angle of the face image 71.

More specifically, range information is stored in the face part detecting range table 341 for each size of the face image 71 in association with predetermined ranges of pitch angles and yaw angles.

The face part detecting range setting section 241 selects range information associated with the size, pitch angle, and yaw angle of the face image 71 supplied from the face detecting section 42 from the face part detecting range table 341.

Specifically, the face part detecting range setting section 241 selects the range information showing face part detecting ranges set in the past based on the size, pitch angle, and yaw angle of the face image 71 from the face part detecting range table 341.

The range information stored in the face part detecting range table 341 is not limited to pieces of information set by the face part detecting range setting section 241, and the information may be supplied from other apparatus.

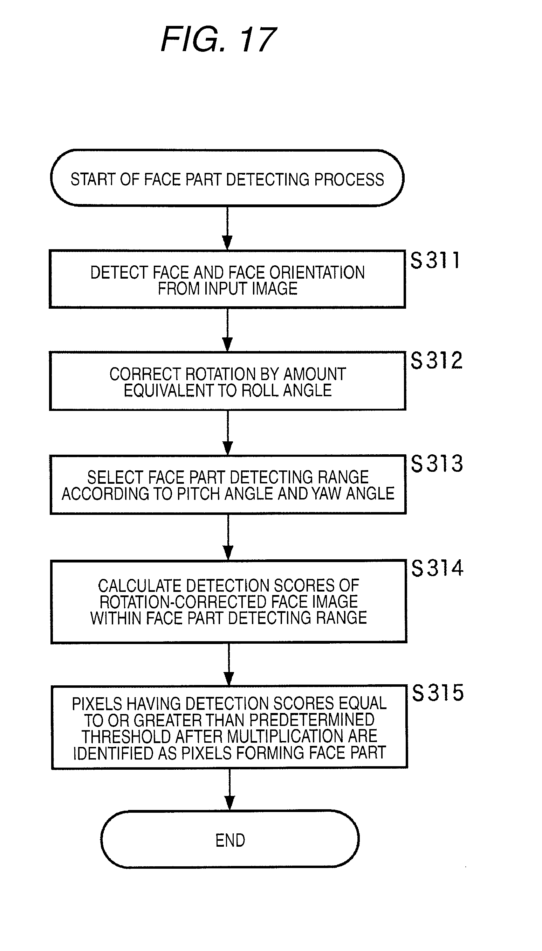

A face part detecting process performed by the face part detecting apparatus 311 shown in Fig. 16 will now be described with reference to the flow chart shown in Fig. 17.

Processes at steps S311, S312, S314, and S315 of the flow chart in Fig. 17 will not be described because they are similar to the processes at steps S211, S212, S214, and S215 of the flow chart in Fig. 13.

At step S313, the face part detecting range setting section 241 selects range information associated with the size, pitch angle, and yaw angle of a face image 71 supplied from the face detecting section 42 from the face part detecting range table 341 and supplies the range information to a face part detecting section 45.

Through the above-described processes, the face part detecting apparatus 311 can detect a right eye that is a face part of a face image 71 extracted from an input image within a face part detecting range indicated by range information stored in the face part detecting range table 341.

Since range information set and stored in advance is used as thus described, there is no need for newly setting a face part detecting range according to a pitch angle and a yaw angle. Further, it is required to calculate detection scores only in a face part detecting range. As a result, a feature of a face can be more accurately detected from a face image regardless of the orientation of the face with a smaller amount of calculation.

The above description has addressed a configuration for weighting detection scores based on a face part weight map 72 and a configuration for calculating detection scores within a face part detecting range that is based on a face part weight map 72. Those configurations may be used in combination.

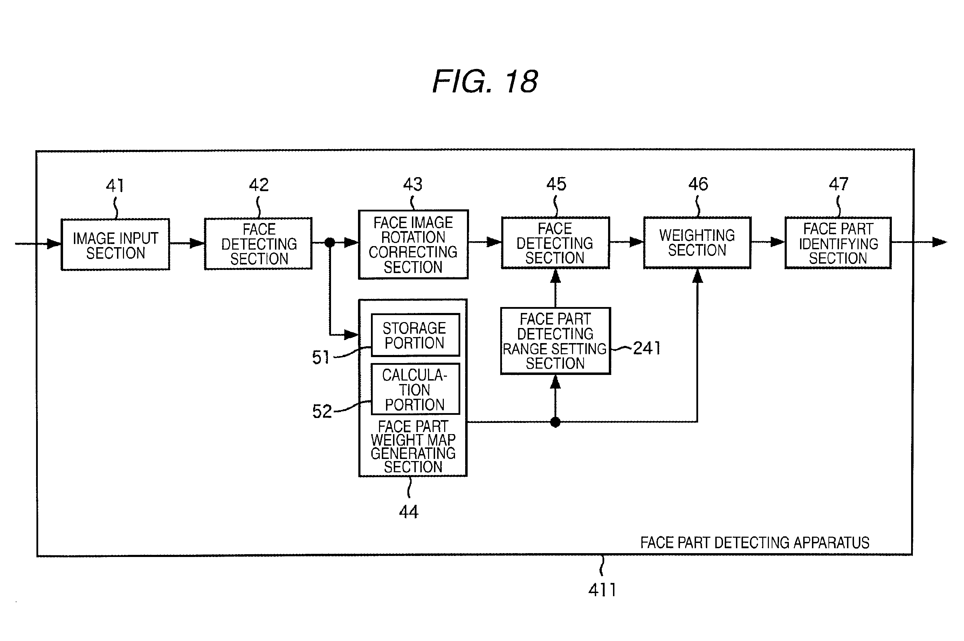

A description will now be made with reference to Fig. 18 on an exemplary configuration of a face part detecting apparatus in which detection scores calculated within a face part detecting range are weighted based on a face part weighting map 72.

Elements corresponding to each other between Figs. 1 and 18 will be indicated by like reference numerals, and the description of such elements will be omitted where appropriate. A face part detecting apparatus 411 shown in Fig. 18 is basically similar in configuration to the face part detecting apparatus 11 shown in Fig. 1 except that it includes a face part detecting range setting section 241 as shown in Fig. 12.

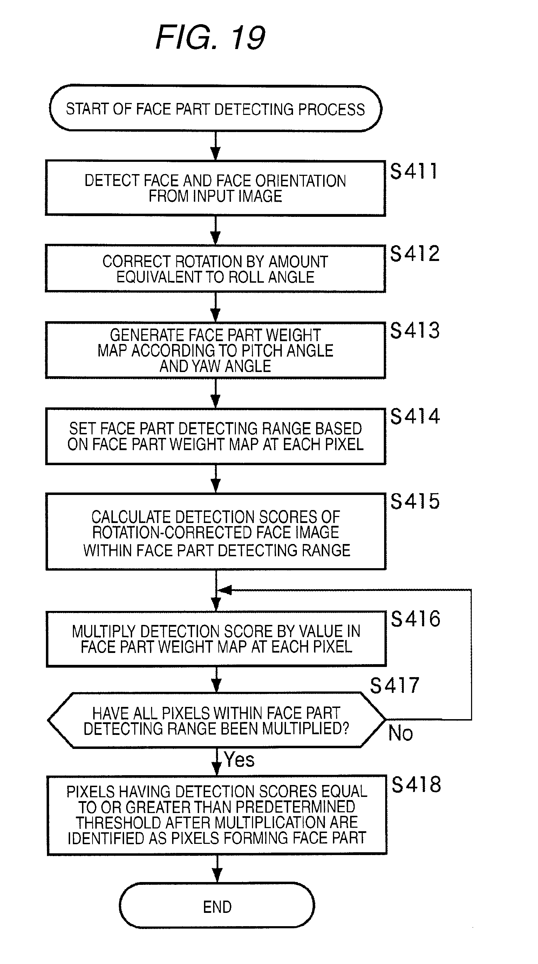

A face part detecting process performed by the face part detecting apparatus 411 shown in Fig. 18 will now be described with reference to the flow chart in Fig. 19.

Processes at steps S411 and S412 of the flow chart in Fig. 19 will not be described because they are similar to the processes at steps S11 and S12 of the flow chart in Fig. 3.

At step S413, a face part weight map generating section 44 generates a face part weight map 72 according to the information of a pitch angle and a yaw angle supplied from a face detecting section 42 and supplies the map to a weighting section 46 and a face part detecting range setting section 241.

At step S414, the face part detecting range setting section 241 sets a face part detecting range that is a range wherein weights have values equal to or greater than a predetermined value in the face part weight map 72 supplied from the face part weight map generating section 44. The section 241 supplies range information indicating the face part detecting range to a face part detecting section 45.

At step S415, the face part detecting section 45 calculates a detection score at each pixel of a face image 71 supplied from a face image rotation correcting section 43 within the face part detecting range indicated by the range information from the face part detecting range setting section 241. The section 45 supplies the detection scores to the weighting section 46.

At step S416, the weighing section 46 weights the detection score of each pixel within the face part detecting range supplied from the face part detecting section 45 based on the face part weight map 72 supplied from the face part weight map generating section 44. The section 46 supplies the weighted detection score of each pixel to a face part identifying section 47.

At step 417, the weighting section 46 determines whether all pixels within the face part detecting range have been multiplied by a weight or not.

When it is determined at step S417 that the multiplication has not been carried out for all pixels within the face part detecting range, the processes at steps S416 and S417 are repeated until the multiplication is carried out for all pixels in the face part detecting range.

When it is determined at step S417 that the multiplication has been carried out for all pixels within the face part detecting range, the process proceeds to step S418.

At step S418, the face part identifying section 47 identifies pixels having detection scores equal to or greater than a predetermined threshold as pixels forming a face part from among the detection scores of all pixels in the face part detecting range provided by the weighting section 46.

Through the above-described steps, the face part detecting apparatus 411 can detect a right eye that is a face part within a face part detecting range of a face image 71 extracted from an input image using a face part weight map 72.

As thus described, a face part detecting range is set based on a face part weight map 72 in accordance with the orientation of a face of interest, and a face part weight map 72 is used for detection scores calculated within the face part detecting range. Therefore, weighting can be accurately carried out on the detection scores within the limited range. As a result, a feature of a face can be more accurately detected from a face image regardless of the orientation of the face of interest with a smaller amount of calculation.

Face part detecting apparatus which weight detection scores calculated within a face part detecting range are not limited to the above-described configuration of the face part detecting apparatus 411. Such apparatus may have a configuration including a face part weight map table 141 as described with reference to Fig. 10 and a face part detecting range table 341 as described with reference to Fig. 16.

In the above description, a detection score is calculated for each pixel (or at each region expressed in pixels). However, the invention is not limited to calculation at each pixel, and a detection score may be calculated for each of predetermined regions such as blocks of 4x4 pixels.

The object of the detection by a face part detecting apparatus according to an embodiment of the invention is not limited to parts of a face, and the detection may be performed on any items which are in somewhat mutually binding positional relationships and which are disposed on an object having a certain orientation, such items including, for example, headlights of a vehicle.

As described above, the face part detecting apparatus according to the embodiment of the invention detects the orientation of a face from a face image, generates a face part weight map 72 based on a statistical distribution of the position of a predetermined part of the face in the face image, calculates a detection score at each pixel of the face image for determining whether the pixel forms the predetermined face part, and identifies predetermined pixels as forming the face part based on the detection scores and the face part weight map 72. Thus, the detection scores of the face part can be accurately weighted. As a result, the feature of the face can be more accurately detected from the face image regardless of the orientation of the face.

The above-described series of steps of a face part detecting process may be executed on a hardware basis, and the steps may alternatively be executed on a software basis. When the series of steps is executed on a software basis, programs forming the software are installed from a program recording medium into a computer incorporated in dedicated hardware or into another type of computer such as a general-purpose computer which is enabled for the execution of various functions when various programs are installed therein.

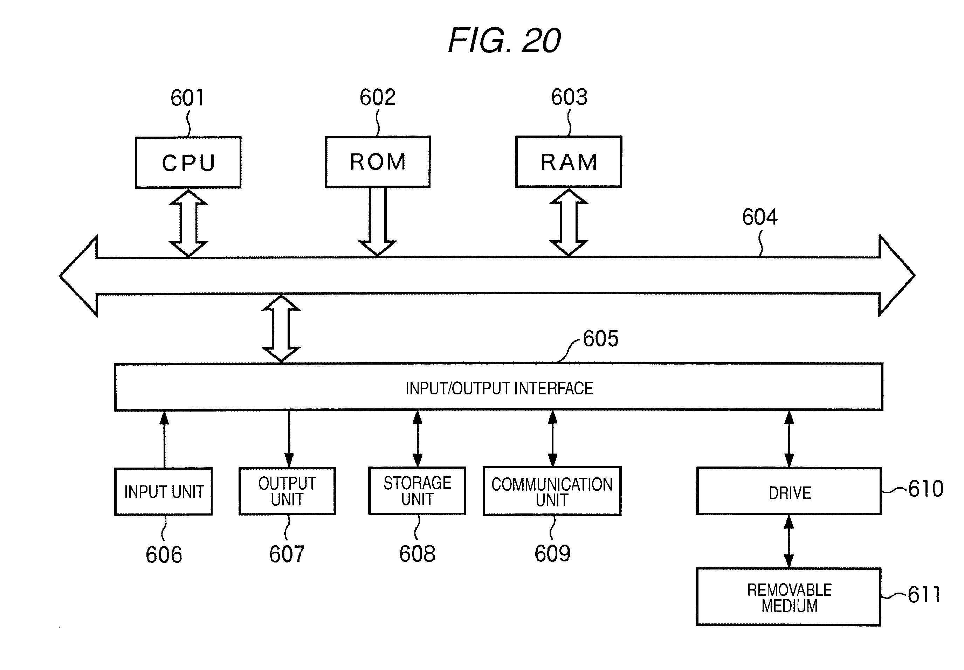

Fig. 20 is a block diagram showing an example of a hardware configuration of a computer on which programs are run to execute the above-described series of steps.

In the computer, a CPU (Central Processing Unit) 601, a ROM (Read Only Memory) 602, and a RAM (Random Access Memory) 603 are interconnected through a bus 604.

An input/output interface 605 is also connected to the bus 604. The input/output interface 605 is connected with an input unit 606 including a keyboard, mouse, and a microphone, an output unit 607 including a display and a speaker, a storage unit 608 including a hard disk and a non-volatile memory, a communication unit 609 including a network interface, and a drive 610 for driving a removable medium 611 such as a magnetic disc, an optical disc, a magneto-optical disc, or a semiconductor memory.

In the computer having the above-described configuration, for example, the CPU 601 executes programs stored in the storage unit 608 by loading them to the RAM 603 through the input/output interface 605 and the bus 604 to execute the above-described series of steps.

For example, the programs executed by the computer (CPU 601) are provided by recording them in the removable medium 611 which is a packaged medium such as a magnetic disc (which may be a flexible disc), an optical disc (a CD-ROM (Compact Disc-Read Only Memory), a DVD (Digital Versatile Disc) or the like), a magneto-optical disc, or a semiconductor memory. The programs may alternatively be provided through a wired or wireless transmission medium such as a local area network, internet, or digital satellite broadcast.

The programs can be installed in the storage unit 608 through the input/output interface 605 by mounting the removable medium 611 in the drive 610. Alternatively, the programs may be installed in the storage unit 608 by receiving them at the communication unit 609 through the wired or wireless transmission medium. Further, the programs may alternatively be installed in the ROM 602 or storage unit 608 in advance.

The programs executed by the computer may be time-sequentially processed according to the order of the steps described in the present specification. The programs may alternatively be processed in parallel or at timing when they are required e.g., when they are called.

It should be understood by those skilled in the art that various modifications, combinations, sub-combinations, and alterations may occur depending on design requirements and other factors insofar as they are within the scope of the appended claims or the equivalents thereof.

**Claims**

1. An information processing apparatus comprising:

   face detecting means (42) for detecting the orientation of a face in a face image;
   weight distribution generating means (44) for generating a weight distribution based on a statistical distribution of the position of a predetermined feature of the face in the face image according to the orientation of the face;
   first calculation means (52) for calculating a first evaluation value for evaluating each of predetermined regions of the face image to determine whether the region is the predetermined feature of the face; and
   face feature identifying means (47) for identifying the predetermined region as the predetermined feature of the face based on the first evaluation value and the weight distribution.

2. An information processing apparatus according to Claim 1, further comprising

second calculation means for calculating a second calculation value by weighting the first evaluation value based on the weight distribution, wherein
the face feature identifying means (47) identifies the predetermined region as the predetermined feature of the face based on the second evaluation value.

3. An information processing apparatus according to Claim 2, further comprising
storage means (51) for storing the weight distribution, which has been generated in advance, in association with the orientation of the face, wherein
the weight distribution generating means (44) selects the weight distribution stored in the storage means (51) according to the orientation of the face.

4. An information processing apparatus according to Claim 1, further comprising
range setting means (241) for setting a range of positions where weight values are equal to or greater than a predetermined value based on the weight distribution, wherein
the first calculation means (52) calculates the first evaluation value for each of predetermined regions of the face image within the range, and
the face feature identifying means (47) identifies the predetermined region as the predetermined feature of the face based on the first evaluation value within the range.

5. An information processing apparatus according to Claim 4, further comprising
storage means (51) for storing range information representing the range, which has been set in advance, in association with the orientation of the face, wherein
the range setting means (241) selects the range information stored in the storage means (51) according to the orientation of the face.

6. An information processing apparatus according to Claim 1, wherein the predetermined regions are regions expressed in pixels.

7. An information processing apparatus according to Claim 1, wherein the weight distribution is a function of an angle of the face which determines the orientation of the face.

8. An information processing method comprising the steps of:

   detecting the orientation of a face in a face image;
   generating a weight distribution based on a statistical distribution of the position of a predetermined feature of the face in the face image according to the orientation of the face;
   calculating a first evaluation value for evaluating each of predetermined regions of the face image to determine whether the region is the predetermined feature of the face; and
   identifying the predetermined region as the predetermined feature of the face based on the first evaluation value and the weight distribution.

9. A program for causing a computer to execute a process including the steps of:

   detecting the orientation of a face in a face image;
   generating a weight distribution based on a statistical distribution of the position of a predetermined feature of the face in the face image according to the orientation of the face;
   calculating a first evaluation value for evaluating each of predetermined regions of the face image to determine whether the region is the predetermined feature of the face; and
   identifying the predetermined region as the predetermined feature of the face based on the first evaluation value and the weight distribution.

## FIG. 1

```
   41              42                    43              45              46              47
IMAGE          FACE          FACE IMAGE         FACE PART                        FACE PART
INPUT          DETECTING     ROTATION           DETECTING      WEIGHTING        IDENTIFYING
SECTION        SECTION       CORRECTING         SECTION        SECTION          SECTION
                             SECTION
```

STORAGE
PORTION ——51

CALCULA-
TION    ——52
PORTION

FACE PART
WEIGHT MAP
GENERATING
SECTION

44

FACE PART DETECTING APPARATUS

11

# FIG. 2

EP 2 101 283 A2

## FIG. 3

```
          ┌─────────────────────────────┐
          │   START OF FACE PART         │
          │   DETECTING PROCESS          │
          └─────────────────────────────┘
                        │
                        ▼
        ┌───────────────────────────────────┐
        │  DETECT FACE AND FACE ORIENTATION  │  S11
        │      FROM INPUT IMAGE              │
        └───────────────────────────────────┘
                        │
                        ▼
        ┌───────────────────────────────────┐
        │ CORRECT ROTATION BY AMOUNT         │  S12
        │ EQUIVALENT TO ROLL ANGLE           │
        └───────────────────────────────────┘
                        │
                        ▼
        ┌───────────────────────────────────┐
        │  GENERATE FACE PART WEIGHT MAP     │  S13
        │     ACCORDING TO PITCH             │
        │  ANGLE AND YAW ANGLE               │
        └───────────────────────────────────┘
                        │
                        ▼
        ┌───────────────────────────────────┐
        │  CALCULATE DETECTION SCORES OF     │  S14
        │  ROTATION-CORRECTED FACE IMAGE     │
        └───────────────────────────────────┘
                        │
                        ▼
        ┌───────────────────────────────────┐
        │  MULTIPLY DETECTION SCORE BY       │  S15
        │  VALUE IN FACE PART WEIGHT MAP     │
        │  AT EACH PIXEL                     │
        └───────────────────────────────────┘
                        │
                        ▼
        ╱─────────────────────────────────╲   S16
        ╲  HAVE ALL PIXELS OF FACE IMAGE   ╱────── No
        ╱  BEEN MULTIPLIED?                ╲
        ╲─────────────────────────────────╱
                        │ Yes
                        ▼
        ┌───────────────────────────────────┐
        │ PIXELS HAVING DETECTION SCORES     │  S17
        │ EQUAL TO OR GREATER THAN           │
        │ PREDETERMINED THRESHOLD AFTER      │
        │ MULTIPLICATION ARE IDENTIFIED AS   │
        │ PIXELS FORMING FACE PART           │
        └───────────────────────────────────┘
                        │
                        ▼
          ┌─────────────────────────────┐
          │           END               │
          └─────────────────────────────┘
```

*FIG. 4*

FIG. 5

EP 2 101 283 A2

*FIG. 6*

EP 2 101 283 A2

*FIG. 7*

EP 2 101 283 A2

FIG. 8

PITCH ANGLE (DEG)

[-45, -15)

[-15, +15]

(+15, +45]

72-1

72-2

72-3

72-4

72-5

72-6

72-7

72-8

72-9

[-45, -15)　　[-15, +15]　　(+15, +45]

YAW ANGLE (DEG)

FIG. 9

## FIG. 10

Block diagram of FACE PART DETECTING APPARATUS (111):

- 41 IMAGE INPUT SECTION → 42 FACE DETECTING SECTION → 43 FACE IMAGE ROTATION CORRECTING SECTION → 45 FACE PART DETECTING SECTION → 46 WEIGHTING SECTION → 47 FACE PART IDENTIFYING SECTION
- 44 FACE PART WEIGHT MAP GENERATING SECTION — containing 51 STORAGE PORTION and 52 CALCULATION PORTION
- 141 FACE PART WEIGHT MAP TABLE

## FIG. 11

START OF FACE PART
DETECTING PROCESS

DETECT FACE AND FACE ORIENTATION
FROM INPUT IMAGE | S111

CORRECT ROTATION BY AMOUNT
EQUIVALENT TO ROLL ANGLE | S112

SELECT FACE PART WEIGHT MAP
ACCORDING TO PITCH
ANGLE AND YAW ANGLE | S113

CALCULATE DETECTION SCORES OF
ROTATION-CORRECTED FACE IMAGE | S114

MULTIPLY DETECTION SCORE BY VALUE IN
FACE PART WEIGHT MAP AT EACH PIXEL | S115

HAVE ALL PIXELS OF FACE IMAGE
BEEN MULTIPLIED? | S116

No

Yes

PIXELS HAVING DETECTION SCORES EQUAL
TO OR GREATER THAN PREDETERMINED
THRESHOLD AFTER MULTIPLICATION ARE
IDENTIFIED AS PIXELS FORMING FACE PART | S117

END

# FIG. 12

## FIG. 13

START OF FACE PART DETECTING PROCESS

DETECT FACE AND FACE ORIENTATION FROM INPUT IMAGE — S211

CORRECT ROTATION BY AMOUNT EQUIVALENT TO ROLL ANGLE — S212

GENERATE FACE PART WEIGHT MAP ACCORDING TO PITCH ANGLE AND YAW ANGLE — S213

SET FACE PART DETECTING RANGE BASED ON FACE PART WEIGTH MAP — S214

CALCULATE DETECTION SCORES OF ROTATION-CORRECTED FACE IMAGE WITHIN FACE PART DETECTING RANGE — S215

PIXELS HAVING DETECTION SCORES EQUAL TO OR GREATER THAN PREDETERMINED THRESHOLD AFTER MULTIPLICATION ARE IDENTIFIED AS PIXELS FORMING FACE PART — S216

END

FIG. 14

EP 2 101 283 A2

FIG. 15

EP 2 101 283 A2

## FIG. 16

FACE PART DETECTING APPARATUS

311

# FIG. 17

START OF FACE PART DETECTING PROCESS

DETECT FACE AND FACE ORIENTATION FROM INPUT IMAGE — S311

CORRECT ROTATION BY AMOUNT EQUIVALENT TO ROLL ANGLE — S312

SELECT FACE PART DETECTING RANGE ACCORDING TO PITCH ANGLE AND YAW ANGLE — S313

CALCULATE DETECTION SCORES OF ROTATION-CORRECTED FACE IMAGE WITHIN FACE PART DETECTING RANGE — S314

PIXELS HAVING DETECTION SCORES EQUAL TO OR GREATER THAN PREDETERMINED THRESHOLD AFTER MULTIPLICATION ARE IDENTIFIED AS PIXELS FORMING FACE PART — S315

END

# FIG. 18

FACE PART DETECTING APPARATUS

411

EP 2 101 283 A2

# FIG. 19

```
START OF FACE PART DETECTING PROCESS
```

DETECT FACE AND FACE ORIENTATION FROM INPUT IMAGE — S411

CORRECT ROTATION BY AMOUNT EQUIVALENT TO ROLL ANGLE — S412

GENERATE FACE PART WEIGHT MAP ACCORDING TO PITCH ANGLE AND YAW ANGLE — S413

SET FACE PART DETECTING RANGE BASED ON FACE PART WEIGHT MAP AT EACH PIXEL — S414

CALCULATE DETECTION SCORES OF ROTATION-CORRECTED FACE IMAGE WITHIN FACE PART DETECTING RANGE — S415

MULTIPLY DETECTION SCORE BY VALUE IN FACE PART WEIGHT MAP AT EACH PIXEL — S416

HAVE ALL PIXELS WITHIN FACE PART DETECTING RANGE BEEN MULTIPLIED? — S417 — No

Yes

PIXELS HAVING DETECTION SCORES EQUAL TO OR GREATER THAN PREDETERMINED THRESHOLD AFTER MULTIPLICATION ARE IDENTIFIED AS PIXELS FORMING FACE PART — S418

```
END
```

# FIG. 20

601 602 603

| CPU | ROM | RAM |

604

605

INPUT/OUTPUT INTERFACE

| INPUT UNIT | OUTPUT UNIT | STORAGE UNIT | COMMUNICATION UNIT | DRIVE | 610 |

606 607 608 609

REMOVABLE MEDIUM — 611

EP 2 101 283 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008065229 A
- JP 2007241579 A
- JP 2008003749 A

- JP 2005284487 A
- JP 2007249852 A

**Non-patent literature cited in the description**

- **Kotaro Sabe ; Kenichi Hidai.** Learning of a Real-time Arbitrary Posture Face Detector Using Pixel Difference Features. *Lectures at the 10th Symposium on Sensing via Image Information,* 2004, 547-552